# EUROPEAN PATENT APPLICATION

(11) **EP 2 982 421 A1**
(43) Date of publication of application: **10.02.2016**
(21) Application number: 14779300.4
(22) Date of filing: 18.02.2014
(51) Int. Cl.: A63B 71/06, G10K 15/04, A63F 13/00

(54) **FACIAL-EXPRESSION ASSESSMENT DEVICE, DANCE ASSESSMENT DEVICE, KARAOKE DEVICE, AND GAME DEVICE**

(30) Priority: 02.04.2013 JP 2013077118
(71) Applicant: NEC Solution Innovators, Ltd., Tokyo 136-8627 (JP)
(72) Inventor: NAGAI, Katsuyuki, Tokyo 136-8627 (JP); FUJITA, Mitsuhiro, Tokyo 136-8627 (JP); MORISHITA, Koji, Tokyo 136-8627 (JP); NODA, Hisashi, Tokyo 136-8627 (JP)
(74) Representative: Vossius & Partner Patentanwälte Rechtsanwälte mbB
(86) International application number: PCT/JP2014/053783
(87) International publication number: WO 2014/162788

(57) **Abstract**

The present invention provides a facial expression grading system that can achieve improved quantitative evaluation of expressiveness of a user by grading a facial expression of the user. The facial expression grading system (1) of the present invention includes: a face image acquisition unit (11) configured to acquire a face image of a target person subjected to grading; a facial expression estimation unit (12) configured to estimate a facial expression from the acquired face image; a facial expression grading unit (13) configured to grade the estimated facial expression of the face image with reference to a predetermined criterion; and a grading result display unit (14) configured to display a grading result.

## Description

### Technical Field

The present invention relates to a facial expression grading system, a dance grading device, a karaoke device, and a game device.

### Background Art

Some conventional dance grading devices or karaoke devices not only allow users to sing to music, but also have some feature in, for example, a way of displaying background images and/or lyrics. For example, Patent Document 1 shown below discloses a karaoke system that can provide a background image and/or display of lyrics suitable for each user according to the attribute (sex, age, etc.) of the user. For example, this karaoke system displays lyrics in a larger size for an elderly user, and displays a currently popular spot in town as a background image for a young user.

On the other hand, in visual communication used in conventional videoconferences, videophones, and the like, an attribute determination method that can determine an attribute such as a facial expression is utilized, as disclosed in Patent Document 2 shown below, for example.

### Citation List

### Patent Document(s)

Patent Document 1: JP 2012-118286 A
Patent Document 2: WO 2012/002047

### Summary of the Invention

### Problems to be solved by the Invention

However, heretofore, there has been no such karaoke device that makes quantitative evaluation of expressiveness of a user with reference to a facial expression of the user. Similarly, there has been no such game that makes quantitative evaluation of expressiveness of a user with reference to a facial expression of the user.

With the foregoing in mind, it is an object of the present invention to provide a facial expression grading system that can achieve improved quantitative evaluation of expressiveness of a user by grading a facial expression of the user.

### Means for Solving Problem

The present invention provides a facial expression grading system including: a face image acquisition unit configured to acquire a face image of a target person subjected to grading; a facial expression estimation unit configured to estimate a facial expression from the acquired face image; a facial expression grading unit configured to grade the estimated facial expression of the face image with reference to a predetermined criterion; and a grading result display unit configured to display a grading result.

The present invention also provides a dance grading device including the facial expression grading system.

The present invention also provides a karaoke device including the facial expression grading system.

The present invention also provides a game device including the facial expression grading system.

### Effects of the Invention

According to the facial expression grading system of the present invention, it is possible to achieve improved quantitative evaluation of expressiveness by grading a facial expression in a dance grading device, a karaoke device, and a game device.

### Brief Description of Drawings

[FIG. 1] FIG. 1 is a block diagram showing the configuration of the present system.
[FIG. 2] FIG. 2 shows an example of the main screen of a dance grading device including the present system (this device may be referred to simply as "dance grading device" hereinafter).
[FIG. 3] FIG. 3 shows enlarged views each showing a series of choreographic motions in the dance grading device including the present system.

### Description of Exemplary Embodiments

### (Embodiments)

Hereinafter, the configuration and operations of the facial expression grading system of the present invention (which may be referred to simply as "the present system" hereinafter) in an exemplary embodiment will be described.

The facial expression grading system 1 of the present invention includes a face image acquisition unit 11, a facial expression estimation unit 12, a facial expression grading unit 13, and an grading result display unit 14. The facial expression grading system 1 further may include a grading criterion display unit 17. The facial expression grading system 1 further may include an image display unit 18. The facial expression grading system 1 further may include a target person attribute determination unit 15. The facial expression grading system 1 further may include an advertisement selection unit 16.

The face image acquisition unit 11 acquires face images of a person who is subjected to grading (hereinafter referred to simply as "target person"). The face image acquisition unit 11 is not particularly limited, and may be a camera or the like, for example. The face image acquisition unit 11 also may be configured so that it acquires face images and extracts one or more face images from the acquired face images.

The facial expression estimation unit 12 estimates the facial expression from the acquired face image. The estimation is not particular limited, and may be achieved by machine learning using model images, for example.

The facial expression is not particularly limited, and may be smiling, neutral, crying, troubled, angry, or the like, for example.

The facial expression grading unit 13 grades the facial expression of the estimated face image with reference to at least one predetermined criterion. The facial expression grading unit 13 may adjust grading criteria according to a determined attribute(s) to be described below, for example.

The criterion is not particularly limited, and may be, for example, the degree or the like of a particular facial expression (smiling, angry, or the like).

The grading is not particularly limited, and may be, for example, score evaluation on a two-grade scale, namely, GOOD (G)/NO GOOD (NG), or on a three-or-more-grade scale.

The grading result display unit 14 displays the grading result. The grading result display unit 14 may display the grading result together with a selected advertisement to be described below.

There is no particular limitation on the grading result. For example, the grading result may be displayed in the form of an image, or may be transmitted to a terminal owned by the target person. The terminal is not particularly limited, and may be a mobile phone, a smartphone, a personal computer, or the like, for example.

The grading criterion display unit 17 displays the grading criteria to the target person.

The image display unit 18 displays the grading result and the grading criteria in the form of an image.

The target person attribute determination unit 15 determines the attribute(s) of the target person from the face image.

The attribute is not particularly limited, and may be, for example, sex, age, race, or nationality.

The advertisement selection unit 16 selects an advertisement according to the attribute(s) of the target person.

The advertisement is not particularly limited, and may be the one suitable for the attribute(s) of the target person, for example. More specifically, when the target person is female, examples of the advertisement include those for cosmetics, small ornamental products, miscellaneous goods, and clothing and accessories. When the target person is male, examples of the advertisement include those for cars, motorcycles, and sporting goods.

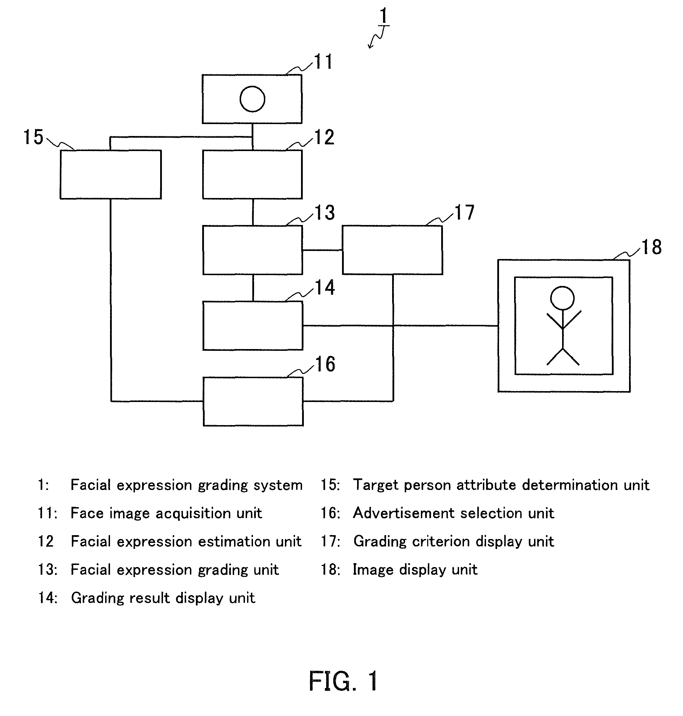

Next, an example of the steps of grading a facial expression using the present system will be described with reference to the block diagram of FIG. 1.

The following description is directed to a case where a target person is an elderly woman and the smiling degree (the extent of smiling) of the target person is graded. It is to be noted, however, that this merely is an illustrative example of the present embodiment, and the present embodiment is not limited thereto by any means.

First, the face image acquisition unit 11 acquires a face image of the woman as the target person. Then, the acquired image data is transmitted to the facial expression estimation unit 12. Subsequently, the facial expression estimation unit 12 estimates the facial expression from the image data. In the present example, the facial expression estimation unit 12 estimates that the facial expression is smiling. For example, the facial expression estimation unit 12 has learned a model image of a smiling face, and achieves estimation with reference to the model image. The estimated facial expression is transmitted to the facial expression grading unit 13. In this case, the facial expression grading unit 13 grades the smiling degree of the woman. As one criterion included in the grading criteria, the model image of the smiling face may be used as the criterion. When necessary, the grading criteria may be adjusted according to the attribute(s) of the target person. For example, in this case, because the target person is old, the grading criteria may be set less strict. In the present example, the facial expression of the target person is evaluated as GOOD. Subsequently, the evaluation data is transmitted to the grading result display unit 14. When necessary, the grading criteria may be transmitted to the grading criterion display unit 17, so that the grading criteria also are displayed to the target person, for example. Next, the grading result display unit 14 displays the grading result. In this case, for example, only the result may be displayed by outputting a text indicating "GOOD" to a terminal owned by the target person, or the image display unit 18 further may display an image showing "GOOD". When necessary, the image data may be transmitted to the target person attribute determination unit 15 and the attribute data (old, female) may be transmitted to the advertisement selection unit 16, so that an advertisement for cosmetics is displayed together with the grading result.

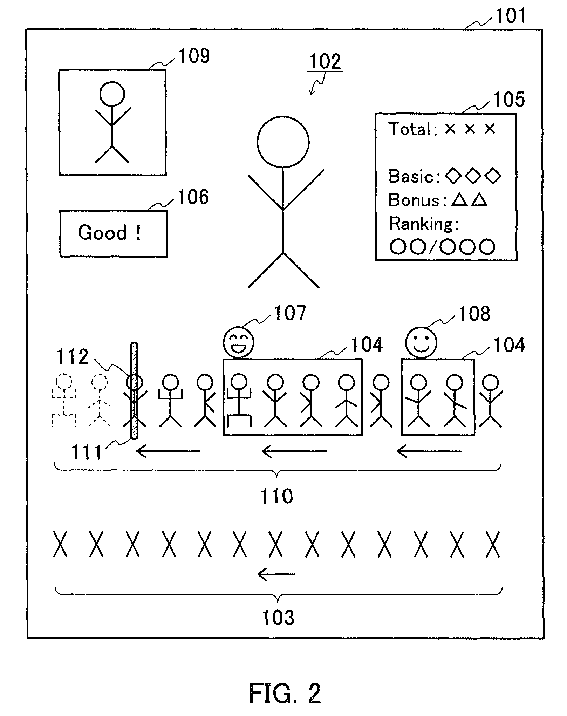

Next, operations of a dance grading device including the system of the present embodiment (hereinafter referred to simply as "the present dance grading device") will be described with reference to FIG. 2.

FIG. 2 shows an example of the screen of the dance grading device. The dance grading device of the present embodiment is not particularly limited, and may have a karaoke function, for example. It is to be noted that the karaoke function is optional. In the following, the dance grading device of the present embodiment will be described with reference to an example where the dance grading device is the device having a karaoke function. The main screen 101 in FIG. 2 displays the following components: a model image 102; a series of choreographic motions (a series of motions) 110; lyrics 103; a grading timing indicator (timing bar) 111; a comprehensive grading result display 105; a pinpoint grading result display 106; face marks 107 and 108; and a target person image 109. These components are not particularly limited, and each of them may or may not be displayed. Also, the main screen 101 further may display any component other than those components as appropriate.

The main screen 101 of the present dance grading device has the same configuration as a main screen of a conventional karaoke device, although such a configuration is not specifically depicted in FIG. 2. Also, the main screen 101 of the present dance grading device has the same configuration as a main screen of a conventional dance grading device. More specifically, as in a conventional dance device or karaoke device, lyrics 103 are displayed, for example. Although the lyrics 103 scroll from right to left in the present example, the present dance grading device is not limited thereto and the lyrics 103 also may scroll from left to right.

There is no particular limitation on the main screen 101. For example, the main screen 101 may display a background image (video) as in a conventional dance grading device or karaoke device. The main screen preferably shows, for example, a promotional video (PV) of an artist, more preferably a PV of dance music. The model image 102 is not particularly limited, and may be an image of a singer, dancer, or the like, for example. This allows a target person to understand tacitly that the evaluation is made on the basis of the expressiveness of an actual singer, dancer, or the like.

As shown in FIG. 2, the main screen 101 displays a series of motions 110 of the model image together with the lyrics 103. The following description is directed to an example where the main screen shows a PV of dance music. More specifically, the following description is made with reference to an example where the main screen 101 shows a video in which a dancer as the model image 102 is dancing while singing. It is to be noted, however, that the dance grading device of the present invention is not limited thereto.

The motions 110 show a series of motions of the dancer. The target person dances following the movement of the dancer while singing. In FIG. 2, the timing bar 111 and a motion 112 on the timing bar 111 indicate the motion of the dancer at the moment. In this example, the target person is score-evaluated on the basis of whether the motion of the target person is the same as the motion 112 on the timing bar 111. That is, the target person gains a higher score as the similarity between the motion of the target person and the motion 112 is higher.

As shown in FIG. 2, the comprehensive grading result display 105 may include a total score, a basic score, a bonus score, a ranking, and the like, for example. In order to display the ranking, the dance grading device may have a function of updating the ranking through communication means whenever necessary, for example. Also, for example, as shown in the pinpoint grading result display 106 in FIG. 2, the dance grading device may have a function of displaying the grading result for every single motion whenever necessary. In FIG. 2, for example, the motion of the target person with respect to the motion 112 is evaluated as GOOD.

Also, as shown in FIG. 2, the motion of the target person may be displayed as the target person image 109. It is preferable that the target person image 109 is updated whenever necessary. It is more preferable that the dance grading device has a function of recording the target person image.

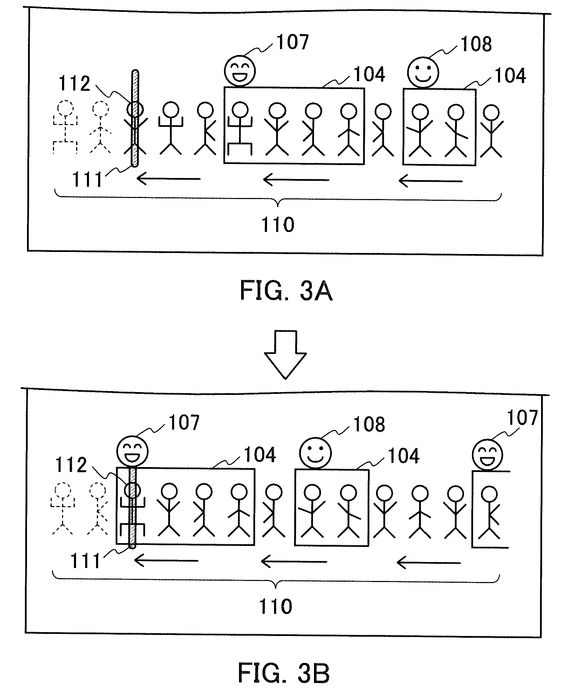

Also, as shown in FIG. 2, the grading criteria may include not only the choreography (motions) but also facial expressions. This will be described specifically below with reference to FIGs. 3A to 3B.

FIGs. 3A to 3B are enlarged views each showing the series of motions 110 of the model image 102 (not shown in FIG. 3). In FIG. 3A, a face mark 107 is displayed above a section 104. The face mark 107 above the section 104 on the left is a face mark showing a smiling face, and a face mark 108 shown above another section 104 on the right is a face mark showing a neutral face. In FIG. 3B, the section 104 is on the timing bar 111. In this case, if the target person shows a smiling face during a period in which the section 104 is on the timing bar 111, the target person gains one or more points. After the section 104 has scrolled off the timing bar 111, another section 104 is on the timing bar 111. In this case, if the target person shows a neutral face, the target person gains one or more points. The face mark may or may not agree with the actual facial expression of the model image (the dancer in the present example), for example. When the grading criteria also include facial expressions as described above, the target person needs to imitate the singing, the choreographic motions, and the facial expressions of the model image, whereby it becomes possible to achieve improved quantitative evaluation of the expressiveness of the target person.

Although the dance grading device including the present system has been described above with reference to an illustrative example, the dance grading device is not limited thereto. For example, the device including the present system may be a karaoke device or a game. The karaoke device may be a device having a karaoke function, as described above in connection with the dance grading device, for example. The game may be a dating simulation game, a music game, or the like, for example. In the case of the dating simulation game, by adapting a conventional dating simulation game so as to incorporate, as a condition of scenario branching, a facial expression at a specific timing or within a certain period of time, it becomes possible to provide more realistic experience to a user. Examples of possible effects obtained thereby include: enhancing the intimacy with a character appearing on the screen when the user shows the same facial expression as the character; and lowering the intimacy when the user shows a smiling face in a serious scene.

While the present invention has been described above with reference to exemplary embodiments, the present invention is by no means limited thereto. Various changes and modifications that may become apparent to those skilled in the art may be made in the configuration and specifics of the present invention without departing from the scope of the present invention.

This application is based upon and claims the benefit of priority from Japanese Patent Application No. 2013-077118 filed on April 2, 2013, the disclosure of which is incorporated herein its entirety by reference.

### Explanation of reference numerals

- 1:: facial expression grading system
- 11:: face image acquisition unit
- 12:: facial expression estimation unit
- 13:: facial expression grading unit
- 14:: grading result display unit
- 15:: target person attribute determination unit
- 16:: advertisement selection unit
- 17:: grading criterion display unit
- 18:: image display unit
- 101:: main screen
- 102:: model image
- 103:: lyrics
- 104:: section
- 105:: comprehensive grading result display
- 106:: pinpoint grading result display
- 107, 108:: face mark
- 109:: target person image
- 110:: series of motions of model image
- 111:: timing bar
- 112:: motion

## Claims

1. A facial expression grading system comprising:
a face image acquisition unit configured to acquire a face image of a target person subjected to grading;
a facial expression estimation unit configured to estimate a facial expression from the acquired face image;
a facial expression grading unit configured to grade the estimated facial expression of the face image with reference to a predetermined criterion; and
a grading result display unit configured to display a grading result.

2. The facial expression grading system according to claim 1, further comprising:
a grading criterion display unit configured to display the grading criterion to the target person.

3. The facial expression grading system according to claim 2, further comprising:
an image display unit,
wherein the image display unit displays the grading result and the grading criterion.

4. The facial expression grading system according to any one of claims 1 to 3, further comprising:
a target person attribute determination unit configured to determine an attribute of the target person from the face image,
wherein the facial expression grading unit adjusts the grading criterion according to the determined attribute.

5. The facial expression grading system according to claim 4, further comprising:
an advertisement selection unit,
wherein the advertisement selection unit selects an advertisement according to the attribute of the target person, and the grading result display unit displays the grading result together with the selected advertisement.

6. A dance grading device comprising:
the facial expression grading system according to any one of claims 1 to 5.

7. A karaoke device comprising:
the facial expression grading system according to any one of claims 1 to 5.

8. A game device comprising:
the facial expression grading system according to any one of claims 1 to 5.
